# FASCICULE DE BREVET EUROPEEN

(11) **EP 0 595 667 B1**
(45) Date de publication et mention de la délivrance du brevet: **13.05.1998**
(21) Numéro de dépôt: 93402374.8
(22) Date de dépôt: 29.09.1993
(51) Int. Cl.: B29C 47/02, B29C 70/00, B60J 10/02

(54) **Procédé pour la fabrication d'un vitrage automobile équipé d'un cadre en élastomère de forme déterminée**
Verfahren zum Herstellen einer Autoglasscheibe mit einem Umfangsrahmen aus Elastomermaterial mit bestimmter Formgebung
Method for making car glazing with an elastomer frame with a selected shape

(30) Priorité: 29.09.1992 DE 4232554
(43) Date de publication de la demande: 04.05.1994
(73) Titulaire: SAINT-GOBAIN VITRAGE, 92400 Courbevoie (FR); VEGLA Vereinigte Glaswerke GmbH, 52066 Aachen (DE)
(72) Inventeur: Cornils, Gerd, Merzenich 2 (DE); Fischer, Florian, Alsdorf (DE); Kotte, Rolf, Alsdorf, Begau (DE); Siegel, Werner, Köln, Rodenki (DE)
(74) Mandataire: Muller, René

(56) Documents cités:
- EP-A- 0 069 021
- EP-A- 0 493 069
- EP-A- 0 524 092
- DE-A- 4 103 047
- DE-C- 4 022 484

## Description

L'invention concerne un procédé pour équiper un vitrage d'un profilé de montage en plastique durcissable à l'aide d'une tête d'extrusion guidée à la périphérie du vitrage par un robot, le profilé étant, au moins partiellement supporté par une forme dont la surface déborde le vitrage alors que celui-ci est placé avec une de ses surfaces au contact de la surface de la forme.

Un tel procédé est l'objet de la demande de brevet DE-A-41 03 047 qui décrit une technique en deux temps pour déposer un cordon fait d'un plastique durcissable à la périphérie d'un vitrage. Le dépôt se fait d'abord sur un moule dont la surface a une forme qui lui permettra d'épouser la surface externe du vitrage et qui comporte, au niveau de la périphérie de celui-ci, une gorge où l'on dépose la matière plastique, le vitrage est ensuite déposé sur la forme et mis au contact avec le plastique où une liaison adhésive est réalisée. Dans un deuxième temps, une tête d'extrusion mobile dépose le long du bord du vitrage et sur le plastique déposé antérieurement, un second cordon de plastique durcissable.

On connaît également la demande de brevet européen EP-A-0 524 092, comprise dans l'état de la technique au sens de l'article 54 (3) CBE, qui décrit la méthode selon laquelle un vitrage ayant subi un prétraitement de sa surface à la périphérie, là où le cadre doit être déposé, est placé sur une table avec sa surface destinée plus tard à être dirigée vers l'intérieur du véhicule placée au-dessus. On dépose alors par extrusion sur la surface supérieure du vitrage, au bord, un profilé dont la section calibrée correspond à celle de la buse d'extrusion. Elle est telle qu'elle donne au cadre la section souhaitée. Selon cette méthode, le cadre profilé est réalisé en un temps raccourci en déposant un cordon d'élastomère thermoplastique sur la surface du vitrage, grâce à une tête d'extrusion chauffante alimentée à partir d'une extrudeuse par l'intermédiaire d'un tuyau haute pression chauffant et guidée à la périphérie du vitrage. Le profilé déposé sur la surface périphérique du vitrage possède avantageusement une lèvre élastique qui déborde du vitrage et qui servira au centrage et à l'étanchéité du vitrage lorsqu'il sera posé dans la baie de la carrosserie. Le fait que la lèvre déborde du vitrage permet son centrage automatique dans la baie et la lèvre assure ainsi un écart constant entre la périphérie et le bord de la feuillure de la baie. Cette lèvre élastique permet également de compenser les tolérances dimensionnelles du vitrage qui résultent des différentes phases de sa fabrication et en particulier de la découpe et du bombage.

L'invention se donne pour tâche de développer ce procédé de telle sorte qu'il permette la réalisation de vitrages équipés d'un cadre d'une très grande précision dimensionnelle, le cadre permettant par ailleurs d'obtenir une parfaite continuité entre le vitrage et la carrosserie lors du montage.

L'invention propose un procédé pour équiper un vitrage d'un profilé en élastomère thermoplastique grâce à une tête d'extrusion chauffante alimentée à partir d'une extrudeuse par un tuyau haute pression chauffant et guidée à la périphérie du vitrage par un robot, le vitrage étant placé avec sa surface au contact de la surface d'une forme chauffante, la surface de la forme débordant le vitrage et la tête d'extrusion chauffante déposant un cordon d'élastomère thermoplastique qui déborde le chant du vitrage et qui est limité par la surface de la forme.

Le procédé de l'invention permet d'obtenir un ensemble vitrage plus cadre dans lequel le cadre en polymère thermoplastique accroît l'encombrement hors tout du vitrage de telle manière que les dimensions extérieures soient précisément celles qu'on désire obtenir, indépendamment des tolérances propres du vitrage avant qu'il ne soit équipé de son cadre en polymère. Par ailleurs, le fait que le polymère soit un polymère thermoplastique offre l'avantage que la zone de transition entre le départ et le retour de la buse d'extrusion à la périphérie du vitrage peut être corrigée de manière simple grâce à un outil de pressage chauffant.

Le procédé de l'invention permet dorénavant d'obtenir de manière simple et économique un vitrage équipé d'un cadre d'une précision aussi grande que celle qu'on obtient par la technique d'encapsulation "cast in place".

Dans une première variante du procédé, la grande précision du pourtour extérieur du vitrage équipé de son cadre est obtenue grâce à l'utilisation d'une forme équipée d'un rebord dont les dimensions internes correspondent aux dimensions externes souhaitées pour le cadre en polymère.

Le même résultat peut être obtenu grâce à une autre variante du procédé de l'invention. Dans celle-ci, la position précise extérieure du cadre extrudé est obtenue directement par l'extrusion à partir de la buse qui équipe la tête, qui, ici, se déplace avec une grande précision selon un cheminement imposé par un robot lors de son déplacement à la périphérie du vitrage.

Dans tous les cas, l'utilisation d'une forme chauffée permet d'être sûr que le polymère thermoplastique sortant de la buse et venant en contact avec la surface de la forme chaude ne va figer qu'après un certain délai ce qui garantit dans tous les cas que la surface de la forme soit parfaitement mouillée. La température de la forme comme la température de travail du polymère doivent être choisies dans chaque cas en fonction des propriétés du polymère qu'on utilise. Il faut en effet d'une part que la viscosité soit suffisamment faible pendant l'extrusion pour que celle-ci s'effectue facilement, mais d'un autre côté, il faut que la prise du polymère se fasse suffisamment rapidement pour que, le plus tôt possible après la fin de l'extrusion, l'on puisse extraire le vitrage et son cadre de la forme.

L'invention sera explicitée dans ce qui suit à l'aide des figures.

Parmi celles-ci,
- la figure 1 présente une installation qui permet la mise en oeuvre du procédé,
- la figure 2 montre une forme avec un rebord ainsi qu'une tête d'extrusion dans la variante la plus simple,
- la figure 3 montre une forme sans rebord et une tête d'extrusion avec ici une buse calibrée adaptée.
- quant à la figure 4, elle représente une forme en deux parties avec une tête d'extrusion qui comporte une buse pour fabriquer un profilé dont la section présente un creux,
- la figure 5, elle, montre une forme en deux parties dans laquelle la forme supérieure est refermée avec ici une buse d'injection particulière.

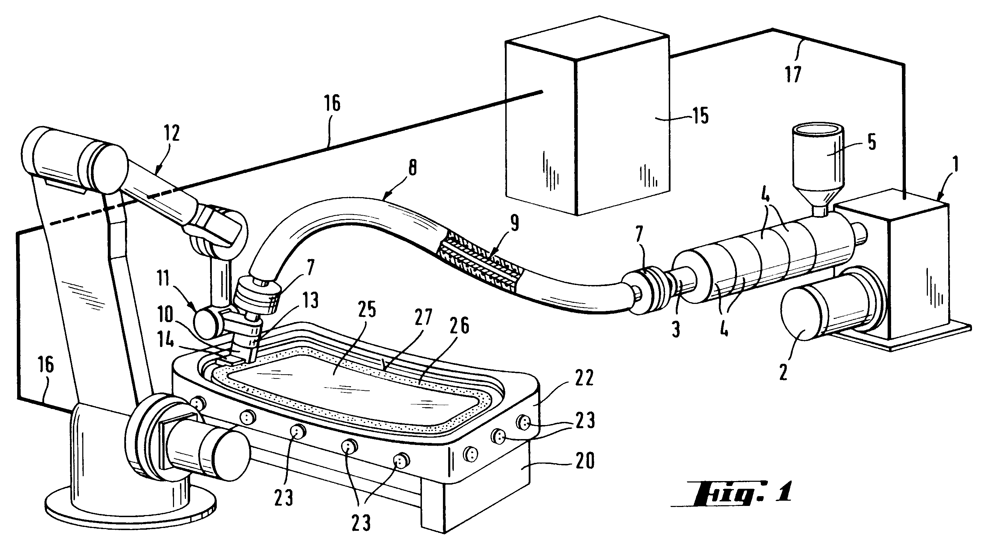

Sur la figure 1, on voit les différents éléments de l'installation nécessaires à la mise en oeuvre de l'invention. Une extrudeuse à vis 1 est actionnée par un moteur 2. Elle comporte un cylindre 3 dans lequel se trouve la vis, autour sont disposés plusieurs anneaux chauffants 4. Le polymère thermoplastique est introduit dans l'entonnoir 5 sous forme de granulés. A la sortie du cylindre 3 se trouve un raccord tournant 7 qui est suivi d'un tuyau haute pression chauffant 8. Le tuyau 8 peut supporter des pressions jusqu'à 250 bar à la température de fonctionnement. Il est équipé d'un enroulement chauffant 9 qui permet de maintenir le tuyau 8 à une température d'au moins 200°C. Par ailleurs, la conception du tuyau 8, en particulier, sa souplesse doit être telle qu'elle permette à la tête d'extrusion 10 de suivre librement sa trajectoire. A l'autre extrémité du tuyau haute pression chauffant 8 se trouve un deuxième raccord tournant 7. Il évite que des efforts de torsion ne soient transmis au tuyau 8 ce qui limite également les forces de réaction sur la tête d'extrusion. On évite de la sorte des imprécisions dans le déplacement de la tête d'extrusion.

La tête d'extrusion 10 alimentée grâce au tuyau à haute pression chauffant 8 avec de l'élastomère fondu est tenue par la "main" 11 d'un robot 12. La tête d'extrusion 10 est équipée elle-même d'un élément chauffant électrique 13. Celui-ci permet de maintenir la température du matériau thermoplastique à extruder à la valeur convenable pour que l'extrusion se fasse dans de bonnes conditions. Cette température est par exemple de 200°C. La tête d'extrusion 10 permet d'extruder le cadre 14 directement à la périphérie du vitrage 25.

L'installation comporte en plus une unité de commande centrale 15. Elle permet grâce à la liaison 16 de commander le robot 12 et, grâce à la liaison 17, de commander l'extrudeuse 1.

Une forme 22 en métal est installée sur un support 20 dans le domaine d'action de la "main" du robot 12. Elle est équipée d'éléments chauffants 23 qui lui permettent d'être chauffée à la température voulue. Un système de régulation thermostatique garantit la stabilité de la température de la forme 22. Le vitrage 25 après avoir été éventuellement préchauffé à une température de 80 à 150° Celsius est placé sur la forme 22 avec sa face concave vers le haut. Après un ajustement éventuel de la position du vitrage 25 sur la forme 22, il est maintenu fermement grâce à un dispositif non représenté, il s'agit par exemple d'une ventouse appliquée sur la face inférieure convexe. Dès que le vitrage 25 est immobilisé dans la position souhaitée, la tête d'extrusion 10 maintenue par la "main" 11 du robot est déplacée à la périphérie du vitrage 25 où l'action combinée de la tête d'extrusion 10 et de la forme 22 permet d'engendrer le cadre en polymère 14 à la périphérie du vitrage 25.

Le vitrage 25 peut être équipé par exemple sur sa face supérieure d'un encadrement 26 fait d'une matière colorante opaque fixée par cuisson telle qu'un émail. La surface du vitrage 25 ou de l'encadrement 26 est nettoyée soigneusement et traitée grâce à un promoteur d'adhérence adapté. Le polymère thermoplastique en fusion peut alors être extrudé.

Un polymère thermoplastique qui s'est montré adapté à la mise en oeuvre de l'invention est le produit Santoprène 111-64 de la Société Advanced Elastomer-Systems. Il s'agit d'un élastomère à base de polyoléfine comme le polypropylène isotactique et d'éthylène-propylène-diène-caoutchouc. Un tel produit possède une température de travail comprise entre 180 et 230°C. Un promoteur d'adhérence adapté à l'adhésion de ce produit sur le verre ou bien sur un encadrement en émail 26 est par exemple un système de polyuréthane à deux composants modifiés en solution dans un mélange de trichloréthylène, de 1-1-1-trichloréthane et de chlorure de méthylène. Ce sont par exemple les produits X 8310 de la Société Henkel ou AK 290 de la Société Kömmerling.

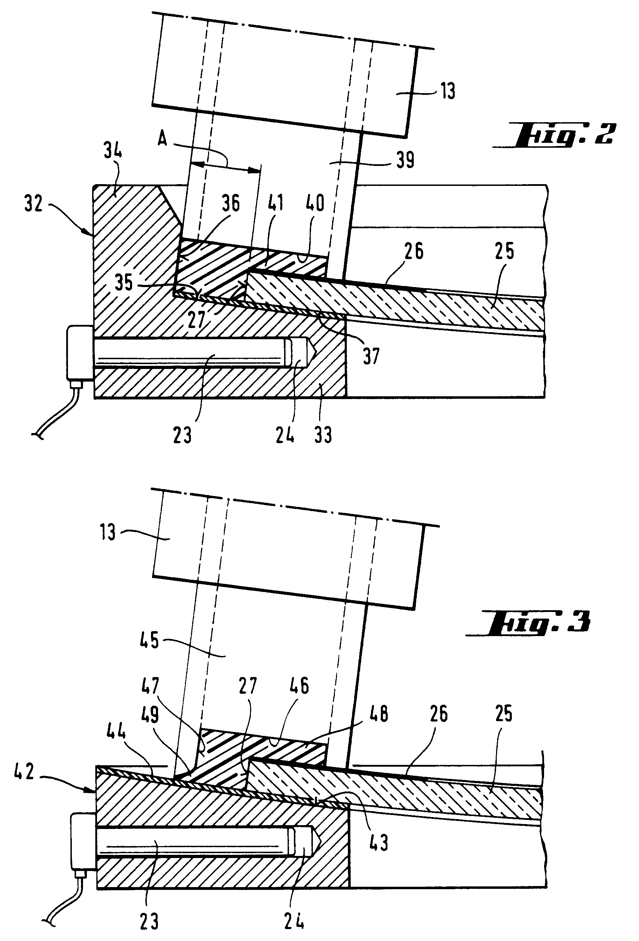

Comme il a été annoncé plus haut, aussi bien la forme 22 que la tête d'extrusion 10 peuvent être conçues de différentes manières. Sur les figures 2 à 5 sont présentés différents types de mise en oeuvre qui permettent tous la réalisation du procédé de l'invention.

Le mode de réalisation du dispositif de la figure 2 montre une forme 32 qui encadre le vitrage. Elle est constituée d'une partie inférieure 33 avec un rebord périphérique 34. La partie inférieure 33 possède une surface 35 capable d'épouser la surface inférieure du vitrage 25. Cependant, la forme 33 déborde du chant 27 du vitrage 25 de la distance A. Latéralement la surface 35 de la partie inférieure 33 est limitée vers l'extérieur par la surface 36 du rebord 34. Les dimensions intérieures de la forme, c'est-à-dire le contour défini par la surface 36 correspondent au contour extérieur du vitrage 25 équipé de son cadre polymère.

La forme 32 est en métal par exemple faite d'un alliage d'aluminium. Sur sa surface 35 on a déposé une couche 37 faite d'un matériau élastique susceptible de se prêter de manière à permettre d'absorber les tolérances du vitrage 25 perpendiculairement à sa surface. Comme on l'a déjà vu la forme est équipée d'une série de trous 24 dans lesquels sont introduits des éléments chauffants électriques 23.

La tête d'extrusion 39 comporte une buse 40 dont la limite supérieure est rectiligne. Cette tête d'extrusion est déplacée par le robot au-dessus du vitrage 25 le long de la surface interne 36 du rebord périphérique de la forme. Lors de ce déplacement un cordon de polymère 41 est déposé à la périphérie du vitrage 25. Ce cordon occupe tout l'espace laissé libre entre le chant 27 du vitrage 25, la surface supérieure de la couche 37 et la surface interne 36 du rebord périphérique 34. Par ailleurs, il est limité dans sa partie supérieure par une zone plate au-dessus du vitrage 25. Après figeage, le cordon de polymère 41 adhère fermement à la surface du vitrage autour duquel il constitue le cadre souhaité.

Sur la figure 3 on a représenté un exemple de réalisasation dans lequel la forme 42 ne possède pas de rebord périphérique. Elle est constituée exclusivement d'une partie inférieure en forme de cadre dont la surface supérieure 43 correspond sensiblement à la surface inférieure du vitrage 25. Ici aussi on a prévu sur la surface métallique 43 une couche 44 faite d'un matériau élastique susceptible d'absorber les tolérances du vitrage. La tête d'extrusion 45 possède une buse calibrée 46 avec ici en plus une paroi latérale 47. Cette paroi a une forme telle qu'elle est capable d'engendrer tout le long du cordon de polymère 48 une excroissance 49 qui a la forme d'une lèvre.

Dans le cas de la figure 3, c'est le seul guidage de la tête d'extrusion à l'aide du robot commandé par la centrale de commande selon une trajectoire définie qui détermine la forme extérieure du cadre. Ce guidage doit donc être effectué avec un très grand soin.

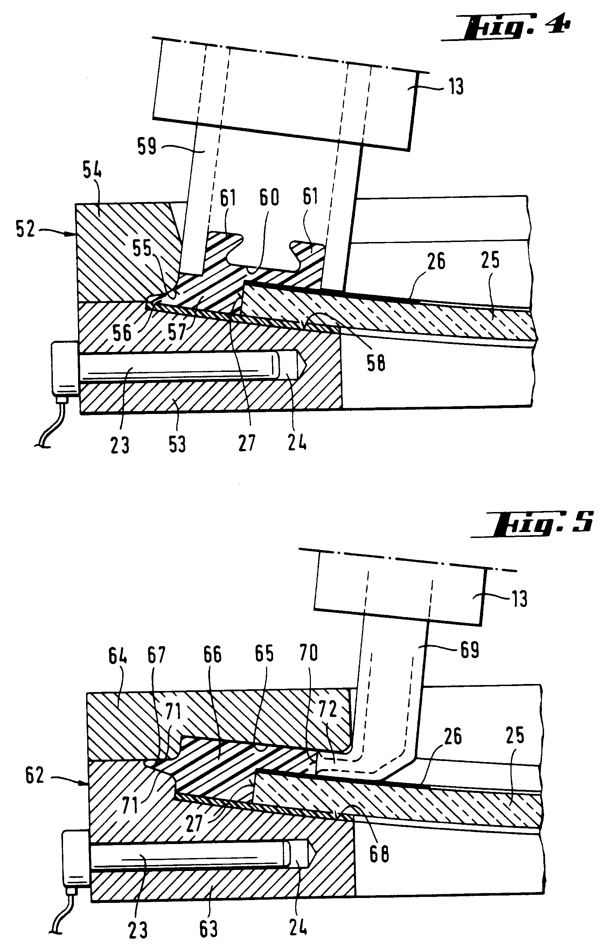

La figure 4 montre un mode de réalisation de l'invention dans lequel la forme 52 est en deux parties, une forme inférieure 53 et une forme supérieure 54. La forme supérieure 54 permet la constitution de l'excroissance 56 en forme de lèvre grâce au profil de ladite forme supérieure 54. En revanche, la forme inférieure 53 réalise la continuation de la surface du vitrage telle qu'elle est matérialisée par la surface supérieure 58 de la forme inférieure 53. En plus, la tête d'extrusion 59 possède une buse d'extrusion 60 dont la forme est telle que le cordon extrudé 57 comporte un canal limité par deux rives 61. La section de ce profilé permet de disposer d'un vitrage capable d'être démonté grâce à un cordon de colle destiné à adhérer sur la tôle qui aura, lors de la pose, rempli le canal prévu dans le cadre sans y adhérer.

Dans le cas de la figure 4 la tête d'extrusion 59 peut ou bien être guidée par le robot selon un programme préétabli le long de la périphérie du vitrage 25 ou bien cette même tête d'extrusion peut longer la forme supérieure 54 ; dans ce dernier cas, elle doit être montée de manière souple dans la "main" du robot et alors, le guidage de la tête d'extrusion n'a pas besoin d'être aussi précis que dans la première méthode.

Le système le plus développé de l'invention est représenté figure 5. Ici de nouveau la forme 62 comporte deux parties, une partie inférieure 63 et une partie supérieure 64 mais à la différence des systèmes précédents, ici la forme 64 s'étend au-dessus du vitrage 25, elle comporte une surface inférieure 65 qui servira à limiter la partie supérieure du cadre en élastomère. Quant à la forme inférieure 63, elle comporte une surface supérieure 68 en continuation de la surface inférieure du vitrage 25. La forme inférieure 63 et la forme supérieure 64 comportent de plus des surfaces 71 destinées à limiter l'excroissance 67 en forme de lèvre qui s'étend au-delà du cadre en élastomère. La seule surface externe du profilé qui soit créée par la buse d'extrusion elle-même est sa surface interne 70, les autres surfaces étant créées, elles, par la forme inférieure et la forme supérieure. La tête d'extrusion 69 possède une extrémité 72 en forme d'équerre de manière à lui permettre de s'introduire entre le vitrage et la surface inférieure 65 de la forme supérieure 64. Ici aussi il est possible de déplacer la tête d'extrusion avec des tolérances larges étant donné que toutes les surfaces externes du cadre profilé sont engendrées par les deux parties de la forme 62.

## Revendications

1. Procédé pour équiper un vitrage (25) d'un profilé en élastomère thermoplastique grâce à une tête d'extrusion chauffante (10 ; 39 ; 45 ; 59 ; 69) alimentée à partir d'une extrudeuse (1) par un tuyau haute pression (8) et guidée à la périphérie du vitrage (25) par un robot (12), procédé dans lequel le vitrage (25) est placé avec une de ses surfaces au contact de la surface (35 ; 43 ; 58 ; 68) d'une forme (22 ; 32 ; 42 ; 52 ; 62) chauffante, la surface (35 ; 43 ; 58 ; 68) de la forme débordant le vitrage (25), et dans lequel la tête d'extrusion chauffante (10 ; 39 ; 45 ; 59 ; 64) dépose un cordon d'élastomère thermoplastique (41 ; 46 ; 60 ; 66) qui déborde le chant (27) du vitrage (25) et qui est limité par la surface (35 ; 43 ; 58 ; 68) de la forme (22 ; 32 ; 42 ; 52 ; 62).

2. Procédé selon la revendication 1, **caractérisé en ce que** le cordon d'élastomère thermoplastique est également limité latéralement par les surfaces (36 ; 55 ; 71) de la forme chauffante (32 ; 52 ; 62).

3. Procédé selon la revendication 2, **caractérisé en ce que** la forme chauffante (52 ; 62) comporte une forme inférieure (53 ; 63) et une forme supérieure (54 ; 64).

4. Procédé selon la revendication 1, **caractérisé en ce que** la tête d'extrusion (45) équipée d'une buse (46) avec une paroi latérale (47) est déplacée à la périphérie du vitrage (25) par le robot (12) selon une trajectoire définie pour donner au cordon d'élastomère (48) une forme extérieure définie.

5. Procédé selon l'une des revendications précédentes, **caractérisé en ce que** les tolérances du vitrage (25) sont absorbées par une couche (37 ; 44) d'un matériau élastique placée sur la surface (35 ; 43 ; 58 ; 68).

6. Procédé selon l'une des revendications précédentes, **caractérisé en ce que** l'élastomère thermoplastique est à base d'une polyoléfine telle que le polypropylène isotactique et de caoutchouc éthylène-propylène-diène.

7. Procédé selon l'une des revendications précédentes, **caractérisé en ce que** avant le dépôt du cordon d'élastomère (41 ; 48 ; 57 ; 66) le vitrage (25) est porté à une température de 80 à 150°C.

8. Dispositif pour mettre en oeuvre le procédé selon l'une des revendications 1 à 4, comportant une extrudeuse (1), un tuyau haute pression chauffant (8) et une tête d'extrusion (10 ; 39 ; 45 ; 59 ; 69) chauffante guidée par un robot (12) commandé comme l'extrudeuse (1) par une unité de commande centrale (15) ainsi qu'une forme (22 ; 32 ; 42 ; 52 ; 62) chauffante dont la surface (35 ; 43 ; 58 ; 68) épouse notamment la surface inférieure périphérique du vitrage (25) qu'elle déborde.

9. Dispositif selon la revendication 8 pour mettre en oeuvre le procédé selon la revendication 4 , **caractérisé en ce qu'**il comporte sur la tête d'extrusion (45), une buse (46) avec une paroi latérale (47), la tête d'extrusion étant destinée à être guidée par le robot (12) selon une trajectoire définie programmée.

10. Dispositif selon la revendication 8 ou 9, **caractérisé en ce qu'**il comporte une couche (37 ; 44) d'un matériau élastique qui est placée à la surface (35 ; 43 ; 58 ; 68) de la forme (22 ; 32 ; 42 ; 52 ; 62).

## Claims

1. Process for equipping a glazing (25) with a thermoplastic elastomer profile by means of a heated extrusion head (10, 39, 45, 59, 69) supplied from an extruder (1) by a high pressure pipe (8) and guided at the periphery of the glazing (25) by a robot (12), wherein the glazing (25) is placed with one of its surfaces in contact with the surface (35, 43, 58, 68) of a heated mould (22, 32, 42, 52, 62), the surface (35, 43, 58, 68) of the mould projecting beyond the glazing (25), and wherein the heated extrusion head (10, 39, 45, 59, 64) deposits a thermoplastic elastomer bead (41, 46, 60, 66), which projects beyond the edge (27) of the glazing (25) and which is limited by the surface (35, 43, 58, 68) of the mould (22, 32, 42, 52, 62).

2. Process according to claim 1, characterized in that the thermoplastic elastomer bead is also laterally limited by the surfaces (36, 55, 71) of the heated mould (32, 52, 62).

3. Process according to claim 2, characterized in that the heated mould (52, 62) comprises a lower mould (53, 63) and an upper mould (54, 64).

4. Process according to claim 1, characterized in that the extrusion head (45) equipped with a nozzle (46) with a lateral wall (47) is displaced at the periphery of the glazing (25) by the robot (120 in accordance with a defined trajectory in order to give the elastomer bead (48) a defined external shape.

5. Process according to one of the preceding claims, characterized in that the tolerances of the glazing (25) are absorbed by an elastic material layer (37, 44) placed on the surface (35, 43, 58, 68).

6. Process according to one of the preceding claims, characterized in that the thermoplastic elastomer is based on a polyolefin such as isotactic polypropylene and ethylene-propylene-diene rubber.

7. Process according to one of the preceding claims, characterized in that prior to the deposition of the elastomer bead (41, 48, 57, 66), the glazing (25) is raised to a temperature of 80 to 150°C.

8. Apparatus for performing the process according to one of the claims 1 to 4, incorporating an extruder (1), a heated, high pressure pipe (8) and a heating extrusion head (10, 39, 45, 59, 69) guided by a robot (12) controlled, like the extruder (1), by a central control unit (15), as well as a heated mould (22, 32, 42, 52, 62), whose surface (35, 43, 58, 68) conforms to the lower, peripheral surface of the glazing (25) beyond which it projects.

9. Apparatus according to claim 8 for performing the process according to claim 4, characterized in that it has on the extrusion head (45) a nozzle (46) with a side wall (47), the extrusion head being guided by the robot (12) along a programmed, defined trajectory.

10. Apparatus according to claim 8 or 9, characterized in that it has an elastic material layer (37, 44) placed on the surface (35, 43, 58, 68) of the mould (22, 32, 42, 52, 62).

## Patentansprüche

1. Verfahren zum Ausstatten einer Glasscheibe (25) mit einem Profil aus einem thermoplastischen Elastomer mittels eines beheizten, von einem Extruder über einen Hochdruckschlauch gespeisten und von einem Roboter (12) entlang dem Umfang der Glasscheibe (25) geführten Extrusionskopfes (10; 39; 45; 59; 64), bei welchem Verfahren die Glasscheibe (25) mit einer ihrer Oberflächen auf eine Formfläche (35; 43; 58; 68) eines beheizten Formbettes (22; 32; 42; 52; 62) aufgelegt wird, wobei die Formfläche (35; 43; 58; 68) des Formbetts über die Glasscheibe (25) hinausragt, und bei welchem der beheizte Extrusionskopf (10; 39; 45; 59; 64) einen Strang aus thermoplastischem Elastomer (41; 48; 60; 66) ablegt, der über die Umfangsfläche (27) der Glasscheibe (25) hinausragt und der von der Formfläche (35; 43; 58; 68) des Formbetts (22; 32; 42; 52; 62) begrenzt wird.

2. Verfahren nach Anspruch 1, **dadurch gekennzeichnet,** daß der Strang aus thermoplastischem Elastomer auch seitlich von den Flächen (36; 55; 71) des beheizten Formbetts (32; 52; 62) begrenzt ist.

3. Verfahren nach Anspruch 2, **dadurch gekennzeichnet,** daß das beheizte Formbett (52; 62) eine Unterform (53; 63) und eine Oberform (54; 64) umfaßt.

4. Verfahren nach Anspruch 1, **dadurch gekennzeichnet,** daß der Extrusionskopf (45), der mit einer eine seitliche Begrenzungsfläche (47) aufweisenden Extrusionsdüse (46) bestückt ist, durch den Roboter (12) am Umfang der Glasscheibe (25) entlang einem definierten Weg verschoben wird, um dem Elastomerstrang (48) eine definierte Außenform zu geben.

5. Verfahren nach einem der vorangehenden Ansprüche, **dadurch gekennzeichnet,** daß die Toleranzen der Glasscheibe (25) durch eine auf der Formfläche (35; 43; 58; 68) angeordnete Schicht (37; 44) aus elastischem Material ausgeglichen werden.

6. Verfahren nach einem der vorstehenden Ansprüche, **dadurch gekennzeichnet,** daß als thermoplastisches Elastomer ein Polyolefin wie isotaktisches Polypropylen und Ethylen-Propylen-Dien-Kautschuk verwendet wird.

7. Verfahren nach einem der vorstehenden Ansprüche, **dadurch gekennzeichnet,** daß die Glasscheibe (25) vor dem Ablegen des Elastomerstrangs (41; 48; 57; 66) auf eine Temperatur von 80 bis 150 °C erwärmt wird.

8. Vorrichtung zum Durchführen des Verfahrens nach einem der Ansprüche 1 bis 4, umfassend einen Extruder (1), einen beheizten Hochdruckschlauch (8), einen beheizten Extrusionskopf (10; 39; 45; 59; 69), der von einem Roboter (12) geführt ist, welcher Roboter (12) wie der Extruder (1) durch eine zentrale Steuereinheit (15) gesteuert ist, sowie ein beheiztes Formbett (22; 32; 42; 52; 62), dessen die Glasscheibe überragender Formfläche (35; 43; 58; 68) sich insbesondere die untere Fläche der Glasscheibe (25) anpaßt.

9. Vorrichtung nach Anspruch 8 zum Durchführen des Verfahrens nach Anspruch 4, **dadurch gekennzeichnet,** daß sie eine am Extrusionskopf (45) angeordnete Düse (46) mit einer Seitenwand (47) umfaßt, wobei der Extrusionskopf zur Führung durch den Roboter (12) entlang einem definierten programmierten Weg bestimmt ist.

10. Vorrichtung nach Anspruch 8 oder 9, **dadurch gekennzeichnet,** daß sie eine Schicht (37; 44) aus elastischem Material umfaßt, die auf der Formfläche (35; 43; 58; 68) des Formbetts (22; 32; 42; 52; 62) angeordnet ist.
